# EUROPÄISCHE PATENTSCHRIFT

(11) **EP 1 283 337 B1**
(45) Veröffentlichungstag und Bekanntmachung des Hinweises auf die Patenterteilung: **11.06.2008**
(21) Anmeldenummer: 02014671.8
(22) Anmeldetag: 03.07.2002
(51) Int. Cl.: F02B 77/08

(54) **Mehrteiliges Referenzelement für eine Wellendrehwinkelmesseinrichtung**
Multi part reference element for a shaft angle measuring device
Elément de référence en multi-parties pour un dispositif de mesure des angles des arbres rotatifs

(30) Priorität: 08.08.2001 DE 10139042
(43) Veröffentlichungstag der Anmeldung: 12.02.2003
(73) Patentinhaber: Bayerische Motoren Werke Aktiengesellschaft, 80809 München (DE)
(72) Erfinder: Kunz, Kurt, 80686 München (DE)

(56) Entgegenhaltungen:
- EP-A- 1 034 868
- DE-A- 2 604 599
- DE-A- 19 743 247
- DE-A- 19 807 959
- US-A- 5 716 145
- US-A- 5 868 036
- US-A- 6 074 316

## Beschreibung

Die Erfindung bezieht sich auf ein mehrteiliges Referenzelement gemäß der mit dem Oberbegriff des Patentanspruchs 1 gebildeten Gattung.

Derartige Referenzelemente werden in Verbindung mit einer geeigneten Sensorik verwendet, um den Drehwinkel von Wellen zu messen. Hierzu ist das Referenzelement mit über den Umfang verteilten, regelmäßig beabstandeten unterscheidbaren Bereichen versehen, mittels derer bei einer Drehung der Welle mittels eines Sensors detektierbare Impulse erzeugbar sind. Das Referenzelement ist dabei in der Regel drehfest mit der Welle verbunden, die Sensorik ist stationär angeordnet, so dass bei einer Wellendrehung eine Relativbewegung zwischen Referenzelement und Sensor vorherrscht.

Beispielsweise weist ein metallisches Referenzelement an seinem äußeren Umfang Zähne und Lücken auf, welche bei Wellenrotation in einem geeigneten Induktionssensor beim Vorbeidrehen Impulse erzeugen oder ein Referenzelement weist magnetische Bereiche auf, deren Vorbeidrehen von einem entsprechenden Magnet-Sensor detektiert wird oder das Referenzelement ist eine Scheibe mit Schlitzen oder Löchern, welche von einem Lichtstrahl beaufschlagt werden, so dass die Drehgeschwindigkeit mittels eines Photosensors ermittelt werden kann.

Zur Messung der Kurbelwellendrehzahl in einem Motor eines Kraftfahrzeuges ist es bekannt, als Referenzelement ein einstückiges Inkrementenrad vorzusehen, welches auf eine auf der Kurbelwelle beispielsweise angegossene umlaufende Scheibe aufgeschrumpft wird. Es hat sich dabei insbesondere als sehr nachteilig erwiesen, dass die Kurbelwelle aufgrund der angegossenen oder -geschmiedeten Scheibe, welche auch aus Gründen der Fertigbarkeit eine gewisse Mindestdicke aufweisen muss, schwer ist, dass der Durchmesser des Inkrementenrades sehr groß sein muss, um es über Bereiche großen Durchmessers, wie Gegengewichte, an den Anbringungsort schieben zu können, wodurch auch ein großer Bauraum beansprucht wird und dass bedingt durch das Aufschrumpfen des Inkrementenrades eine Demontage nur sehr bedingt möglich ist.

Abhilfe haben geteilte Inkrementenräder geschaffen, wie sie beispielsweise durch die US 4,002,937 oder die DE 197 43 247 A1 bekannt geworden sind.

Die DE 197 43 247 A1 offenbart eine Kurbelwellenwinkelsensoranordnung, bei der das Referenzglied aus mehreren Teilen besteht, um den Ein- und Ausbau zu vereinfachen. Es ist ein aus zwei Ringsegmenten bestehendes Resolverrad vorhanden, welches Befestigungslöcher zur Aufnahme von Befestigungselementen zur Anbringung an der Kurbelwange aufweist.

In der US 4,002,937 ist eine Einrichtung zur Messung der Rotation einer Welle, insbesondere eine magnetische Einheit zur drehfesten Montage auf einer Welle, beschrieben, welche in Verbindung mit Sensormitteln zur Erzeugung entsprechender Signale eine Messung der Wellenrotation ermöglicht. Die magnetische Einheit ist aus zwei halbringförmigen Segmenten zusammengesetzt, wobei im Bereich der Trennebene beispielsweise Stifte zur relativen Lagefixierung vorgesehen sind und das Element auf der Welle festgeklemmt wird.

Diese bekannten geteilten Inkrementenräder weisen eine Vielzahl Nachteile auf. Beispielsweise ist eine sehr aufwändige Bearbeitung der Trennfläche im Stoßbereich der Segmente notwendig, um eine sehr geringe Fuge zur Vermeidung von Fehlsignalen zu erreichen und/oder die Segmente positionsgenau kraft- und/oder formschlüssig miteinander zu verbinden. Eine Konstruktion mit Passstiften oder anderen formschlüssigen Verbindungselementen zeigt die US 4,002,937. Weiterhin wurde die Befestigung auf der Welle noch nicht zufriedenstellend gelöst, eine Klemmbefestigung wie in der US 4,002,937 genügt keinesfalls gehobenen Anforderungen. Zudem stellt die Massenverteilung über den Umfang ein großes Problem dar, insbesondere wenn die Segmente selbst oder die Befestigungsmittel so ausgebildet sind, dass die Masse nicht symmetrisch um die Drehachse verteilt ist. Beispielsweise zeigt die DE 197 43 247 A1 zwei Segmente, wobei ein Segment einen Winkel von ca. 270° und das andere Segment einen Winkel von ca. 90° überdeckt; die Befestigung der magnetischen Einheit in der US 4,002,937 erfolgt mittels einer Schlauchschelle, die rotationsasymmetrisch ist.

Als Aufgabe der Erfindung stellt sich die Schaffung eines verbesserten mehrteiligen, aus Ringsegmenten bestehenden Referenzelementes der eingangs genannten Art, welches unter Vermeidung der beschriebenen Nachteile mit einfachen Mitteln kostengünstig und reproduzierbar genau herstellbar ist und auf diese Weise eine hohe Herstellprozesssicherheit bietet, welches sehr hohen Anforderungen an die Messgenauigkeit genügt und welches in Hinblick auf das Gewicht optimiert ist.

Die Lösung der Aufgabe erfolgt mit den im Patentanspruch 1 angegebenen Merkmalen, welcher den Gedanke beinhaltet, das Referenzelement erst einstückig herzustellen, um es dann in Segmente zu zerteilen.

Vorteilhafte Weiterbildungen und Ausgestaltungen der Erfindung sind Gegenstand der Unteransprüche.

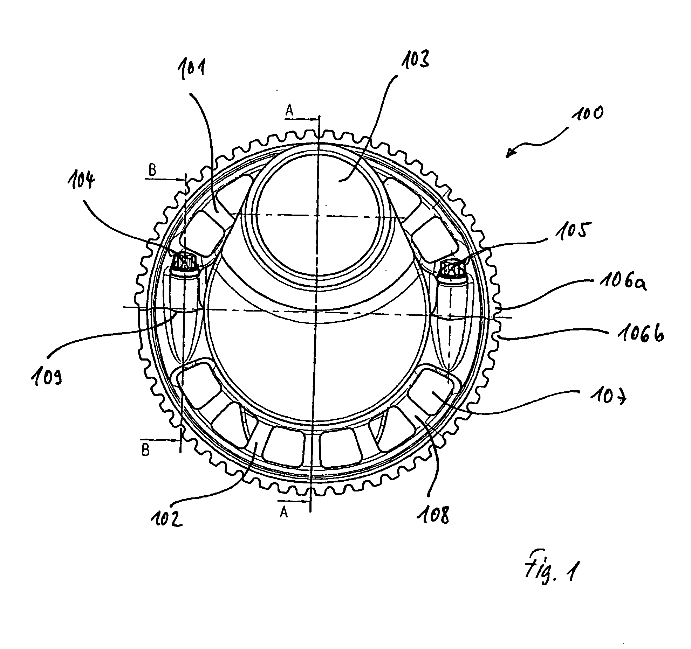

Nachfolgend wird ein Ausführungsbeispiel der Erfindung unter Bezugnahme auf Figuren näher beschrieben, dabei zeigen schematisch und beispielhaft
- Figur 1: ein auf einer Kurbelwelle montiertes mehrteiliges Referenzelement,
- Figur 2a: einen Schnitt durch ein auf einer Kurbelwelle angeordnetes Referenzelement,
- Figur 2b: einen Schnitt durch ein auf einer Kurbelwelle angeordnetes Referenzelement,
- Figur 3a: eine perspektivische Ansicht eines mehrteiligen Referenzelementes in Explosionsdarstellung,
- Figur 3b: eine perspektivische Ansicht eines mehrteiligen Referenzelementes in Explosionsdarstellung,
- Figur 4a: ein Referenzelement im Rohzustand und
- Figur 4b: ein Referenzelement im Rohzustand im Schnitt.

Das Referenzelement 100 ist konzentrisch zur Kurbelwellenachse angeordnet, und weist über den Umfang verteilt Zähne 106a und Lücken 106b auf, mittels derer der Drehwinkel der Kurbelwelle messbar ist. Das gezeigte Referenzelement 100 ist in einer Trennebene 109 geteilt, so dass zwei Ringsegmente 101 und 102 gebildet werden. Die Verschraubung der beiden Ringsegmente 101, 102 erfolgt vorliegend mittels zweier Schrauben 104 und 105, welche schräg durch beide Ringsegmente 101, 102 geschraubt werden. Das dargestellte Referenzelement 100 ist besonders gewichtsoptimiert konstruiert und aus Guss- oder Sintermaterial hergestellt. Eine besondere Gewichtsersparnis sowie ein vorteilhaftes schwingungstechnisches Verhalten wird durch Ausnehmungen 107 und Stege 108 erreicht.

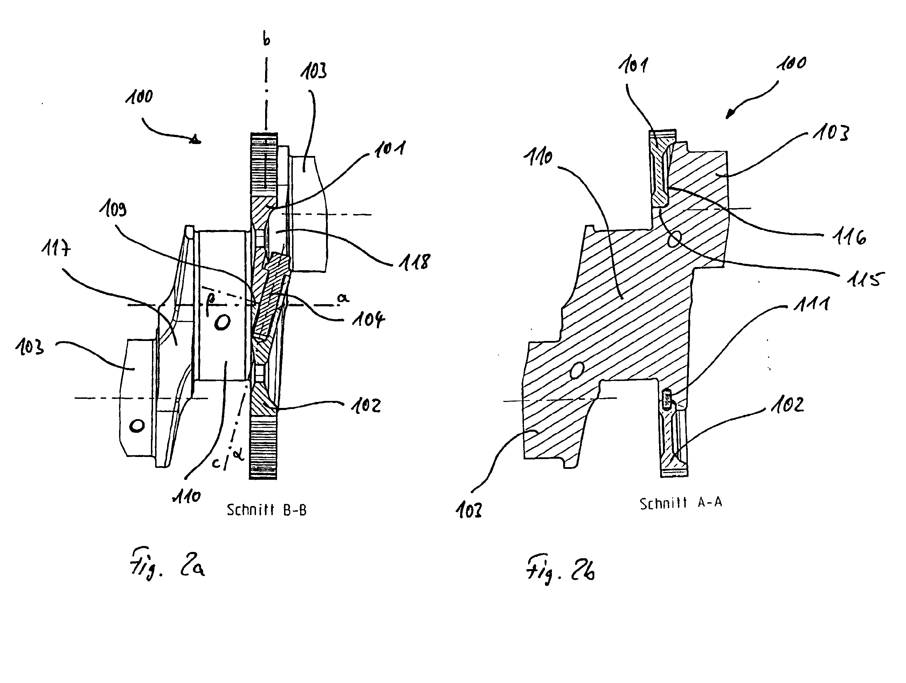

In der Darstellung ist die Kurbelwelle mit einer Lagerstelle 110 sowie zwei Hubzapfen 103 und zwei Kurbelwangen 117, 118 gezeigt. Die beiden Segmente 101 und 102 des Referenzelementes 100 sind mittels der Schrauben 104, 105 miteinander verbunden, wobei in der Figur 2a nur die Schraube 104 sichtbar ist. Die Verschraubung erfolgt unter einem Winkel α zur Kurbelwellenachse a senkrechten Achse b. Der Winkel α wird vorteilhaft derart gewählt, dass die Schraube 104, 105 einerseits die beiden Segmente 101, 102 des Referenzelementes 100 miteinander verbindet, andererseits ein guter Zugang zum Schraubenkopf bei der Montage gewährleistet ist.

In einem anderen Ausführungsbeispiel kann es auch zweckmäßig sein, wenn der Winkel α größer gewählt wird und/oder die Schrauben 104, 105 länger sind, so dass mittels der Schraubverbindung nicht nur die beiden Segmente 101, 102 miteinander verbunden werden, sondern gleichzeitig auch eine Befestigung an der Kurbelwelle selbst erfolgt. Hierzu sind die Bohrungen in den Segmenten 101, 102 zum Durchgang der Schrauben 104, 105 ausgebildet und das Gewinde ist in der Kurbelwelle selbst angeordnet. Auf diese Weise werden nicht nur die Segmente 101, 102 miteinander und mit der Kurbelwelle verbunden, sondern es ist zugleich auch eine Verdrehsicherung zwischen Referenzelement 100 und der Kurbelwelle realisiert. Im vorliegenden Ausführungsbeispiel erfolgt die Verdrehsicherung wie in Figur 2b gezeigt mittels eines oder mehrerer über den inneren Umfang der Segmente 101, 102 verteilten Stifte(s) 111.

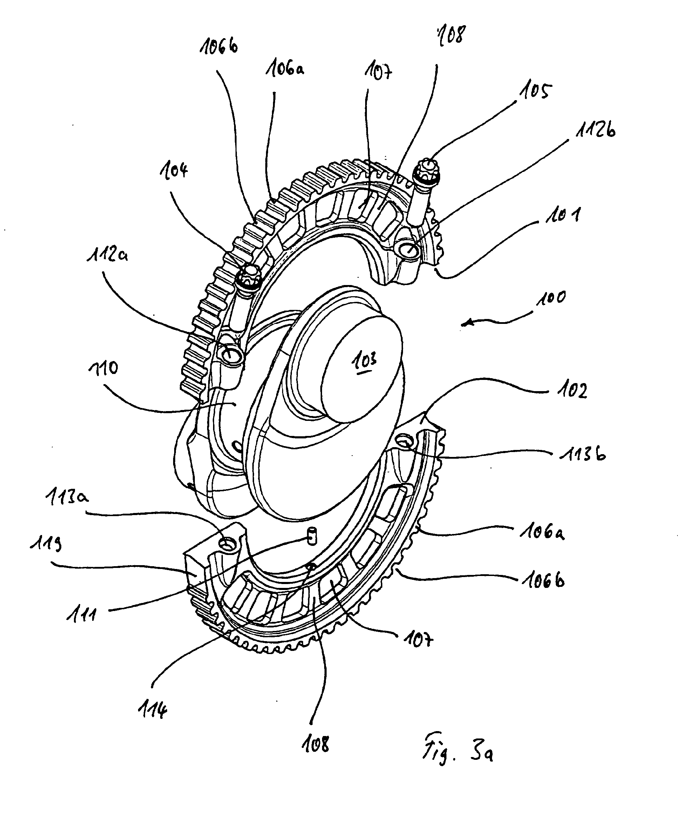

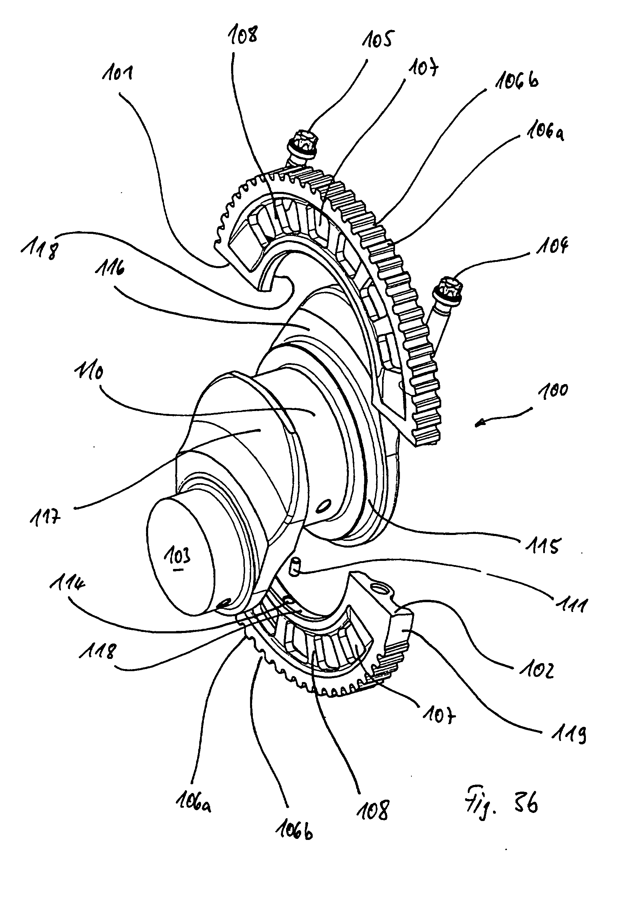

Die Figuren 3a und 3b zeigen perspektivische Ansichten des mehrteiligen Referenzelementes, der Befestigungsmittel und der Kurbelwelle in Explosionsdarstellung. Das Segment 101 weist Durchgangsbohrungen 112a, 112b auf, durch die Schrauben 104, 105 in in dem Segment 102 befindliche Gewinde 113a, 113b geschraubt werden. Im dargestellten Ausführungsbeispiel sind die Schrauben 104, 105 gleichläufig durch das Segment 101 mit dem Segment 102 verschraubt, in einem anderen Ausführungsbeispiel wird es jedoch als sehr zweckmäßig angesehen, wenn die Schrauben gegenläufig - d.h. eine Schraube durch das Segment 101 mit dem Segment 102 und die andere Schraube durch das Segment 102 mit dem Segment 101 - verschraubt werden, wodurch sich insbesondere eine besonders günstige und gleichmäßige Verteilung der rotierenden Massen ergibt.

Figur 3b zeigt den Bund 115, auf dem das aus den Segmenten 101 und 102 bestehende Referenzelement 100 angebracht wird. Durch die Verschraubung der beiden Segmente 101, 102 miteinander wird das Referenzelement 100 mit der inneren Fläche 118 am Bund 115 festgeklemmt, wobei der Seitenbereich des Referenzelementes 100 an der Kurbelwange 116 anliegt. Eine Verdrehsicherung zwischen Referenzelement 100 und Kurbelwelle wird einerseits zwischen der Innenfläche 118 des Referenzelementes 100 und der Oberfläche des Bundes 115 erreicht, wobei hier eine gewisse Oberflächenrauhigkeit vorteilhaft ist, andererseits wird mit dem Stift 111 eine zusätzliche formschlüssige Verdrehsicherung erreicht, wobei die maßgebliche Funktion des Stiftes 111 die exakte rotatorische Positionierung des Inkrementenrades 100 in Bezug auf die Kurbelwelle umfasst, so dass die durch eine Verbreiterte Lücke gebildete Markierung 119 beispielsweise den oberen Totpunkt eines ersten Zylinders anzeigt.

Das Referenzelement 100 wird durch Sintern oder Gießen hergestellt, wodurch es möglich wird, eine Teilung in Segmente in der Trennebene 109 durch an sich bekanntes Cracken zu erreichen. Zur Erleichterung des Crack-Vorganges ist es zweckmäßig, das Referenzelement 100 in einem vorangehenden Arbeitsgang zu härten und im Bereich der gewünschten Trennebene 109 am inneren und/oder am äußeren Umfang und/oder an den Seitenbereichen Sollbruchstellen vorzusehen. Sehr zweckmäßig ist es, wenn die Sollbruchstellen mittels Kerblasern erzeugt werden, wodurch einerseits Material in Form einer Mehrzahl kleiner, entsprechend der Sollbruchrichtung nebeneinanderliegende Kerben abgetragen wird und andererseits aufgrund der dabei erfolgenden Erhitzung des Materials sich punktuell Härtezonen ausbilden, welche einen nachfolgenden Crackvorgang begünstigen. Andererseits kann das Referenzelement 100 in einem vorangehenden Arbeitsgang gehärtet werden, wobei sich als Härteverfahren beispielsweise Nitrierhärten eignet, die Kerben zur Bildung von Sollbruchstellen können auch während dem Sinter- oder Gießvorgang und/oder bei einer nachfolgenden spanenden Bearbeitung hergestellt werden.

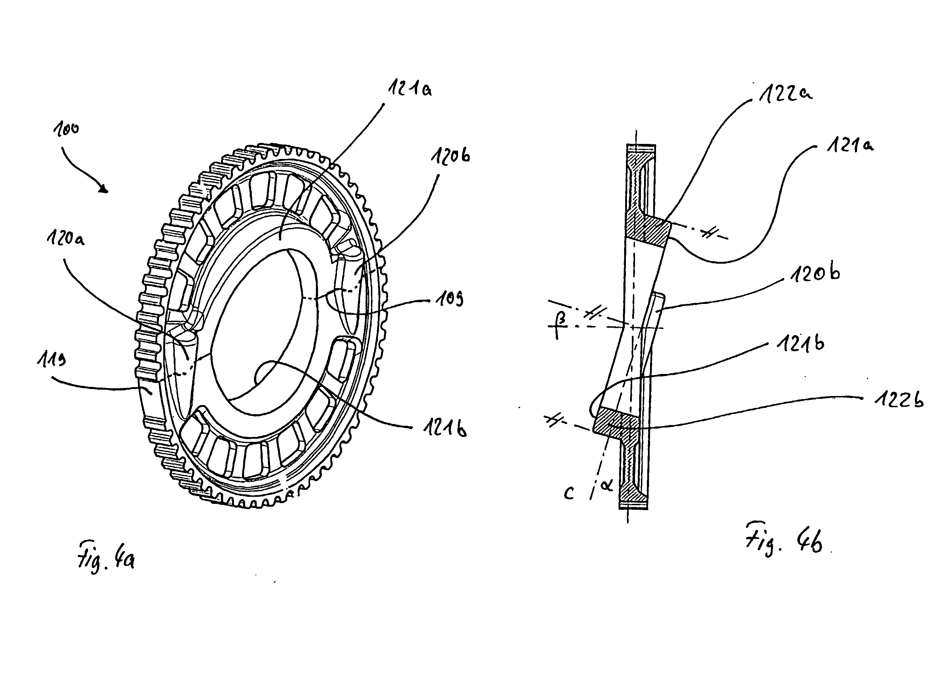

Wie in Figur 2a gezeigt, verläuft die Trennebene 109 in etwa senkrecht zur Schraubenachse c, so dass sie in der Darstellung mit der Kurbelwellenachse a einen Winkel β einschließt. Zur Herstellung dieser schrägen Trennebene 109 ist es sehr zweckmäßig, wenn ein entsprechendes schräges Crackverfahren zur Anwendung kommt. Hierzu weist das in Figur 4a und mit Figur 4b im Schnitt gezeigte Referenzelement 100 im Rohzustand eine Form auf, die gezielt dieses schräge Cracken ermöglicht. Gemäß einem bevorzugten Ausführungsbeispiel sind Hilfsflächen 121a, 121b vorhanden, welche entsprechend der Achse a bzw. zu dieser parallel unter Bildung des Winkels α mit der Ebene des Referenzelementes 100 verlaufen, so dass ein Cracken entlang der Ebene 109 unter Bildung des Winkels β vorteilhaft ermöglicht wird. Die vorhandenen Hilfsflächen 121a, 121b werden später entfernt, indem die Bereiche 122a, 122b bis auf die gestrichelt dargestellte Ebene spanend abgearbeitet werden. Dies bietet weiterhin die Möglichkeit, durch gezielten Materialabtrag das Referenzelement 100 zu wuchten. Mit 120a, 120b sind Angüsse für den späteren Schraubendurchgang bzw. Gewinde bezeichnet

## Patentansprüche

1. Mehrteiliges, aus Ringsegmenten bestehendes, auf einer Welle, insbesondere einer Kurbelwelle, zur Wellenachse koaxial befestigbares Referenzelement, welches über den Umfang verteilt beabstandete unterscheidbare Bereiche aufweist, mittels derer bei einer Drehung der Welle mittels eines Sensors detektierbare Impulse erzeugbar sind, **dadurch gekennzeichnet, dass** zur Herstellung ein einteiliges ringförmiges Referenzelement in Ringsegmente (101, 102) geteilt wird und zur Befestigung jeweils eine Schraube
unter Bildung eines Winkels α mit der zur Kurbelwellenachse (a) normalen Achse (b) schräg zwei Ringsegmente (101, 102) im Bereich der Trennebene (109) verbindet um die Ringsegmente (101, 102) mittels der Schrauben (104, 105) auf einem Bund (115) der Welle festzuklemmen.

2. Referenzelement nach Anspruch 1, **dadurch gekennzeichnet, dass** die Teilung in Ringsegmente (101, 102) mittels Cracken erfolgt.

3. Referenzelement nach Anspruch 1 oder 2, **dadurch gekennzeichnet, dass** die Ringsegmente (101, 102) je einen Winkelbereich von zumindest annähernd 180° überdecken.

4. Referenzelement nach Anspruch 1, **dadurch gekennzeichnet, dass** die Trennebene (109) der Ringsegmente (101, 102) im Wesentlichen senkrecht zur Achse der Befestigungsschrauben liegt und mit der Kurbelwellenachse (a) einen Winkel (β) einschließt.

5. Referenzelement nach Anspruch 1 oder 4, **dadurch gekennzeichnet, dass** das Referenzelement (100) schräg gecrackt wird.

## Claims

1. A multi-part reference element comprising annular segments fastened to a shaft, especially a crankshaft, coaxial with the shaft axis and having spaced-apart distinguishable regions distributed around its periphery for generating pulses detectable by a sensor when the shaft rotates, **characterised in that** in the production process a one-part annular reference element is divided into annular segments (101, 102) and respective screws at an angle (a) to the axis (b) normal to the crankshaft axis (a) connects each pair of annular segments (101, 102) in the region of the parting plane (109) in order firmly to clamp the annular segments (101, 102) by the screws (104, 105) on to a collar (115) on the shaft.

2. A reference element according to claim 1, **characterised in that** the division into annular segments (101, 102) is made by cracking.

3. A reference element according to claim 1 or 2, **characterised in that** the annular segments (101, 102) each cover an angular region of at least approximately 180°.

4. A reference element according to claim 1, **characterised in that** the parting plane (109) between the annular segments (101, 102) lies substantially at right angles to the axis of the fastening screws and is at an angle (β) to the crankshaft axis (a).

5. A reference element according to claim 1 or claim 4, **characterised in that** the reference element (100) is cracked at an angle.

## Revendications

1. Elément de référence en plusieurs parties, formé de segments annulaires, se fixant sur un arbre notamment un vilebrequin, coaxialement à l'axe de l'arbre, et ayant des régions distinctes, réparties à la périphérie et à l'aide desquelles on génère des impulsions détectées par un capteur lors de la rotation de l'arbre,
**caractérisé en ce que**
pour la fabrication, on divise un élément de référence de forme annulaire en une seule partie en segments annulaires (101, 102) et pour la fixation, on utilise une vis reliant en biais deux segments annulaires (101, 102) dans la région du plan de séparation (109) en formant un angle (α) par rapport à la normale (b) à l'axe (a) du vilebrequin, pour serrer les segments annulaires (101, 102) à l'aide des vis (104, 105) sur une collerette (115) de l'arbre.

2. Elément de référence selon la revendication 1,
**caractérisé en ce que**
la division en segments annulaires (101, 102) se fait par rupture.

3. Elément de référence selon la revendication 1 ou 2,
**caractérisé en ce que**
les segments annulaires (101, 102) couvrent respectivement une plage angulaire d'au moins sensiblement 180°.

4. Elément de référence selon la revendication 1,
**caractérisé en ce que**
le plan de séparation (109) des segments annulaires (101, 102) est pratiquement perpendiculaire à l'axe des vis de fixation et forme un angle (β) avec l'axe (a) du vilebrequin.

5. Elément de référence selon la revendication 1 ou 4,
**caractérisé en ce que**
l'élément de référence (100) est rompu en biais.
